# EUROPÄISCHE PATENTSCHRIFT

(11) **EP 2 590 811 B1**
(45) Veröffentlichungstag und Bekanntmachung des Hinweises auf die Patenterteilung: **16.04.2014**
(21) Anmeldenummer: 11721774.5
(22) Anmeldetag: 26.05.2011
(51) Int. Cl.: B29D 30/38, B29C 70/02, B60C 9/18, B60C 9/00, B29K 105/08, B29K 277/00, D02G 3/48

(54) **ELASTOMERPRODUKT, ENTHALTEND EIN LINIENFÖRMIGES, TEXTILES GEBILDE ZUR VERSTÄRKUNG**
ELASTOMER PRODUCT CONTAINING A LINEAR TEXTILE STRUCTURE FOR REINFORCEMENT
PRODUIT ÉLASTOMÈRE CONTENANT UNE STRUCTURE TEXTILE EN FORME DE LIGNE POUR LE RENFORCEMENT

(30) Priorität: 07.07.2010 DE 102010017786
(43) Veröffentlichungstag der Anmeldung: 15.05.2013
(73) Patentinhaber: Continental Reifen Deutschland GmbH, 30165 Hannover (DE)
(72) Erfinder: KRÜGER, Jörn, 30926 Seelze (DE); JUSTINE, Carole, 31535 Scharrel (DE); ZMOLEK, Peter, 30655 Hannover (DE); SPECKHALS, Ulrich, 30655 Hannover (DE)
(74) Vertreter: Finger, Karsten
(86) Internationale Anmeldenummer: PCT/EP2011/058611
(87) Internationale Veröffentlichungsnummer: WO 2012/004051

(56) Entgegenhaltungen:
- EP-A1- 1 818 567
- EP-A2- 0 320 705
- GB-A- 1 242 145
- JP-A- 2009 126 502
- US-A- 2 594 235
- US-A1- 2008 167 415
- US-A1- 2010 078 919

## Beschreibung

Die Erfindung betrifft ein Elastomerprodukt, enthaltend ein linienförmiges, textiles Gebilde zur Verstärkung.

Eine Vielzahl elastomerer Produkte, wie Schläuche, Förderbänder, Antriebsriemen und Fahrzeugluftreifen, sind mit linienförmigen, textilen Gebilden als Festigkeitsträger zur Verstärkung versehen. Bei den linienförmigen, textilen Gebilden kann es sich um Garne, Zwirne oder Corde handeln, die z. B. in Form von Geweben, Gelegen oder Gewirken in den Elastomerprodukten vorliegen. Sie sind dem Fachmann in Aufbau und Material in unterschiedlichsten Ausführungen bekannt.

Bei Fahrzeugluftreifen werden linienförmige, textile Gebilde in der Regel als Garne oder Corde im Wulstbereich, als Karkassmaterial, für Gürtellagen und als Gürtelbandage eingesetzt. Die Garne oder Corde werden während der Herstellung der Reifen in eine Kautschukmischung eingebettet, um als gummierte Festigkeitsträgerlage im Reifen eingesetzt werden zu können.

Die Gürtelbandage dient bei Fahrzeugluftreifen, insbesondere beim Hochgeschwindigkeitseinsatz, dazu, eine Erhebung des Reifens durch die im Fahrbetrieb auftretenden Fliehkräfte zu verhindern. Sie ist bei einem Fahrzeugluftreifen, welcher im Allgemeinen eine luftundurchlässige Innenschicht, eine Festigkeitsträger enthaltende Radialkarkasse, die vom Zenitbereich des Reifens über die Seitenwände bis in den Wulstbereich reicht und dort meist durch Umschlingen zugfester Wulstkerne verankert ist, einen radial außen befindlichen, Profilrillen aufweisenden Gummilaufstreifen und einen Gürtel zwischen dem Gummilaufstreifen und der Karkasse aufweist, zwischen Gürtel und Laufstreifen angeordnet. Die Gürtelbandage kann ein- oder mehrlagig ausgebildet sein, deckt zumindest die Gürtelränder ab und enthält parallel und im Wesentlichen in Umfangsrichtung verlaufende Festigkeitsträger in Form von Corden, die in eine Kautschukmischung eingebettet sind. Die Gürtelbandage wird bei der Reifenherstellung in Form von Lagen mit in eine unvulkanisierte Kautschukmischung eingebetteten Festigkeitsträgern aufgebracht, die auf den Gürtel gewickelt oder gespult werden. Die Festigkeitsträger werden für solche Lagen in Kautschuk eingebettet, indem eine Schar von im Wesentlichen parallel liegenden fadenförmigen Festigkeitsträgern, die in der Regel thermisch und/oder zur besseren Haftung am einbettenden Gummi in dem Fachmann bekannter Art mit einer Imprägnierung vorbehandelt sind, in Längsrichtung einen Kalander oder einen Extruder zur Ummantelung mit der Kautschukmischung durchlaufen. Bei der Bombage mit bisher im Einsatz befindlichen Reifenaufbauvorrichtungen und der Vulkanisation des Reifens dehnt sich der Reifen in der Regel im Schulterbereich durch die Erhebung um bis zu 2 % und im Mittenbereich um bis zu 4 % im Vergleich zum unvulkanisierten Rohling, wenn der Rohling auf einer flachen Trommel gewickelt wird. Somit soll der Festigkeitsträger, welcher in der Gürtelbandage eingesetzt ist, vorteilhafterweise diese Erhebung erlauben, aber ebenfalls während der Vulkanisation des Reifens ein geeignetes Schrumpfverhalten aufweisen, um zumindest die Gürtelränder niederzudrücken.

Bisher werden als Materialien für Festigkeitsträger in elastomeren Erzeugnissen, insbesondere in Gürtelbandagen von Fahrzeugluftreifen, einerseits primär (unmittelbar) auf fossilen Rohstoffen (auf Erdöl) basierende textile Festigkeitsträger, wie beispielsweise PET (Polyethylenterephthalat), Aramid und Nylon oder Hybridkorde aus deren Garnen eingesetzt.

In der EP 1818567 A1 sind Antriebsriemen aus Gummi oder gummiähnlichem Kunststoff mit einer Oberflächenarmierung beschrieben, wobei die Oberflächenarmierung polyamid- und/oder polyesterhaltige textile Festigkeitsträger enthält. Als aliphatisches Polyamid des Festigkeitsträgers wird ein Gewebe aus Nylon (Polyamid 6.6) offenbart.

Die US 2594235 A offenbart ein Gewebe für Benzincontainer, welches gegenüber Benzin resistent ist und hierfür Filamente aus kaltgezogenem Polyamid enthält. Als interpolymeres Polyamid wird das Kondensationsprodukt aus Hexamethylendiamin, Adipinsäure und ε-Caprolactam offenbart, wodurch das Polyamid aus Monomeren mit jeweils sechs Kohlenstoffatomen aufgebaut ist.

In der EP 0320705 A2 wird ein Gürtelpaket für Fahrzeugreifen offenbart, welches eine Gewebelage aus gummierten Corden enthält. Als Material für die Corde wird Aramid offenbart.

Andererseits ist es bekannt, nicht-erdölbasierte textile Festigkeitsträger aus Rayon oder Lyocell einzusetzen. Dies sind Chemiefasern aus natürlichen Polymeren, nämlich Cellulose.

Zur Schonung von Umwelt und Ressourcen ist man bestrebt, den Anteil an Rohstoffen, die auf Erdöl basieren, wie Synthesefasern, in Elastomerprodukten zu reduzieren. Dabei sollen aber gleichzeitig die vom Produkt geforderten Eigenschaften nicht beeinträchtigt werden.

Der Einsatz von Naturfasern wie Baumwolle in der Gummiindustrie wird allerdings dadurch eingeschränkt, dass sie keine endlose Faserstruktur und eine stark schwankende Faserqualität aufweisen. Das fehlende Schrumpfverhalten von Naturfasern macht sie zudem ungeeignet für den Einsatz als Festigkeitsträger in Gürtelbandagen von Fahrzeugluftreifen.

Der alternative Einsatz von Rayon als Faser auf der Basis von Cellulose, also nichterdölbasierend, ist zwar möglich. Von Nachteil ist jedoch, dass das Produktionsverfahren von Rayon aus Umweltgesichtspunkten problematisch ist und beim speziellen Einsatz als Gürtelbandage ebenfalls das fehlende Schrumpfverhalten erschwerend wirkt.

Nachteilig an Rayon ist zudem, dass Rayon feuchtigkeitsempfindlich ist und sich die Bruchkraft des Festigkeitsträgers durch Feuchtigkeitsaufnahme verringert. Zudem ist Rayon in seiner Anschaffung kostenintensiv.

Der Erfindung liegt die Aufgabe zu Grunde, ein Elastomerprodukt mit linienförmigen, textilen Gebilden zur Verstärkung bereitzustellen, das bei gleichbleibender Produktqualität im Hinblick auf die Schonung von Umwelt und Ressourcen weiter verbessert ist.

Gelöst wird die Aufgabe erfindungsgemäß dadurch, dass linienförmige, textile Gebilde Fasern aus Polyamid 10.10 (PA 10.10) enthält.

Polyamid 10.10 stellt ein Polykondensationsprodukt aus 1,10-Decamethylendiamin und 1,10-Decandisäure (Sebacinsäure) dar, wobei beide Monomere aus Ricinusöl gewonnen werden. Damit basiert Polyamid 10.10 zu 100 % auf natürlichen Ressourcen und nicht auf Erdöl und ist damit umwelt- und ressourcenschonend. Das Ricinusöl wird aus den Samen der Ricinusstaude gewonnen, die weder als Nahrungs- noch als Futtermittelpflanze genutzt wird. Der umweltfreundliche Charakter wird noch dadurch betont, dass die Ricinusstaude unter Bedingungen gedeiht, unter denen sie nicht in Konkurrenz zu anderen Nutzpflanzen steht. Zudem weisen Polyamid 10.10-Fasern im Vergleich zu Naturfasern eine gleichbleibende Qualität auf und sind als Endlosfasern herstellbar. Somit kann eine gleichbleibende Produktqualität sichergestellt werden und die Verarbeitungssicherheit ist gegeben.

Polyamid 10.10 zeichnet sich durch eine hohe mechanische Festigkeit und Beständigkeit gegenüber Chemikalien aus. Durch ein geringes Wasseraufnahrnevermögen bleiben die guten Eigenschaften, wie die Bruchkraft, auch bei Feuchtigkeitseinwirkung erhalten.

Zusätzlich ist von Vorteil, dass Polyamid 10.10 eine große Ähnlichkeit mit Polyamid 6.6 hat, welches in Elastomerprodukten häufig eingesetzt wird. Auf diese Weise ist ein leichter Austausch von Polyamid 6.6 durch Polyamid 10.10 unter Beibehaltung beispielsweise des verwendeten Haftsystems möglich.

In einer Ausführungsform der Erfindung ist das linienförmige, textile Gebilde ein verdrehtes Multifilamentgarn, wobei die im Elastomerprodukt gewünschten Eigenschaften durch die Produktionsparameter eingestellt werden können.

Gemäß einer bevorzugten Weiterbildung der Erfindung weist das Multifilamentgarn eine Feinheit von 100 bis 5000 dtex und eine Verdrehung von 100 bis 600 t/m auf. Derartige Multifilamentgarne lassen sich einfach herstellen und können z. B. als Festigkeitsträger in Fahrzeugluftreifen eingesetzt werden.

Gemäß einer alternativen Ausführungsform der Erfindung ist das linienförmiges, textiles Gebilde ein Cord aus zumindest zwei miteinander endverdrehten Multifilamentgarnen, wobei die einzelnen Multifilamentgame eine Feinheit von jeweils 250 bis 4000 dtex und eine Vorverdrehung von 100 bis 600 t/m aufweisen und mit einer Verdrehung von 100 bis 600 t/m endverdreht sind. Polyamid 10.10 findet so eine analoge Anwendung wie Polyamid 6.6 oder Polyester. Bei dem Cord sind vorzugsweise 2 oder 3 Multifilamentgame miteinander endverdreht.

Bei dem Cord können alle Multifilamente aus Polyamid 10.10 bestehen. Das hat den Vorteil, dass der gesamte Cord aus einem umwelt- und ressourcenschonenden Material besteht.

Es ist aber auch möglich, dass zumindest ein Multifilamentgarn des Cordes nicht aus Polyamid 10.10 besteht. Es handelt sich dann um einen so genannten Hybridcord. Dieser ist dann zumindest teilweise umweltfreundlich und ressourcenschonend gestaltet und bietet als weiteren Vorteil die Möglichkeit der definierten Einstellung des Cordes durch eine gezielte Materialauswahl des nicht aus Polyamid 10.10 bestehenden Garnes.

Bei dem zumindest einen, nicht aus Polyamid 10.10 bestehenden Garn kann es sich vorzugsweise um ein Multifilamentgarn aus Polyester (z. B. PET oder PEN), einem anderen Polyamidtyp als Polyamid 10.10, Aramid oder Polyketon (z. B. Arselon^{®}) handeln.

Besonders bevorzugt ist jedoch der Einsatz von Chemiefasern aus natürlichen Polymeren, wie Rayon oder Lyocell, oder Naturfasern. Der gesamte Hybridcord ist dann aus Materialien hergestellt, die nicht auf Erdöl basieren, und kann durch geeignete Materialauswahl der Garne definiert in seinen Eigenschaften eingestellt sein.

Bei dem erfindungsgemäßen Elastomerprodukt handelt es sich vorzugsweise um einen Fahrzeugluftreifen. Fahrzeugluftreifen sind Massenprodukte, bei denen der Austausch erdölbasierter Materialien gegen Materialien, die nicht auf Erdöl basieren, zu einem besonders großen Effekt hinsichtlich der Ressourcenschonung führt. Zudem hat sich gezeigt, dass textile Gebilde, enthaltend Fasern aus Polyamid 10.10, im Reifen zu hoher Haltbarkeit führen.

Bevorzugt wird das linienförmige, textile Gebilde, welches Fasern aus Polyamid 10.10 enthält, in der Gürtelbandage von Fahrzeugluftreifen eingesetzt, wo sich insbesondere das Schrumpfverhalten und die Wärmebeständigkeit des Polyamid 10.10 positiv auswirken.

Ein PKW-Reifen kann beispielsweise eine Gürtelbandage aus Hybridcorden folgenden Aufbaus aufweisen, wobei zumindest eines der Multifilamentgame aus Polyamid 10.10 besteht:
Variante A:
   Rayon: Feinheit dtex 1100 x 1, Vorverdrehung 380 t/m
   Polyamid 10.10: Feinheit dtex 700 x 1, Vorverdrehung 380 t/m
   Endverdrehung der beiden Multifilamentgarne: 380 t/m
Variante B:
   Lyocell: Feinheit dtex 1670 x 1, Vorverdrehung 250 t/m
   Polyamid 10.10: Feinheit dtex 1400 x 1, Vorverdrehung 380 t/m
   Endverdrehung der beiden Multifilamentgarne: 380 t/m
Variante C:
   Rayon: Feinheit dtex 1100 x 1, Vorverdrehung 380 t/m
   Polyamid 10.10: Feinheit dtex 700 x 1, Vorverdrehung 380 t/m
   Polyamid 10.10: Feinheit dtex 700 x 1, Vorverdrehung 380 t/m
   Endverdrehung der drei Multifilamentgarne: 380 t/m

Reifen mit einer Bandage aus den vorgenannten Hybridcorden sind im Hinblick auf die Schonung der Umwelt und der Ressourcen verbessert.

## Patentansprüche

1. Elastomerprodukt, enthaltend ein linienförmiges, textiles Gebilde zur Verstärkung, **dadurch gekennzeichnet, dass** das linienförmige, textile Gebilde Fasern aus Polyamid 10.10 enthält.

2. Elastomerprodukt nach Anspruch 1, **dadurch gekennzeichnet, dass** das linienförmige, textile Gebilde ein verdrehtes Multifilamentgarn ist.

3. Elastomerprodukt nach Anspruch 1 oder 2, **dadurch gekennzeichnet, dass** das Multifilamentgarn eine Feinheit von 100 bis 5000 dtex und eine Verdrehung von 100 bis 600 t/m aufweist.

4. Elastomerprodukt nach Anspruch 1, **dadurch gekennzeichnet, dass** das linienförmige, textile Gebilde ein Cord aus zumindest zwei miteinander endverdrehten Multifilamentgarnen ist, wobei die einzelnen Multifilamentgarne eine Feinheit von jeweils 250 bis 4000 dtex und eine Vorverdrehung von 100 bis 600 t/m aufweisen und mit einer Verdrehung von 100 bis 600 t/m endverdreht sind.

5. Elastomerprodukt nach Anspruch 4, **dadurch gekennzeichnet, dass** der Cord aus 2 oder 3 endverdrehten Multifilamentgarnen besteht.

6. Elastomerprodukt nach Anspruch 4 oder 5, **dadurch gekennzeichnet, dass** alle Multifilamentgame des Cordes aus Polyamid 10.10 bestehen.

7. Elastomerprodukt nach Anspruch 4 oder 5, **dadurch gekennzeichnet, dass** zumindest ein Multifilamentgarn des Cordes nicht aus Polyamid 10.10 besteht.

8. Elastomerprodukt nach Anspruch 7, **dadurch gekennzeichnet, dass** das zumindest eine Multifilamentgarn aus Polyester, einem anderen Polyamidtyp als Polyamid 10.10, Aramid, Polyketon, vorzugsweise aus Chemiefasern aus natürlichen Polymeren oder Naturfasern, besteht.

9. Elastomerprodukt nach zumindest einem der Ansprüche 1 bis 8, **dadurch gekennzeichnet, dass** es ein Fahrzeugluftreifen ist.

10. Elastomerprodukt nach Anspruch 9, **dadurch gekennzeichnet, dass** das linienförmige, textile Gebilde in der Gürtelbandage enthalten ist.

## Claims

1. Elastomer product containing a linear textile structure for reinforcement, **characterized in that** the linear textile structure contains fibers of polyamide 10.10.

2. Elastomer product according to Claim 1, **characterized in that** the linear textile structure is a twisted multifilament yarn.

3. Elastomer product according to Claim 1 or 2, **characterized in that** the multifilament yarn has a fineness in the range from 100 to 5000 dtex and a twist in the range from 100 to 600 t/m.

4. Elastomer product according to Claim 1, **characterized in that** the linear textile structure is a cord of two or more mutually end-twisted multifilament yarns wherein the individual multifilament yarns each have a fineness in the range from 250 to 4000 dtex and a first twist in the range from 100 to 600 t/m and were end-twisted together at a twisting rate in the range from 100 to 600 t/m.

5. Elastomer product according to Claim 4, **characterized in that** the cord consists of 2 or 3 end-twisted multifilament yarns.

6. Elastomer product according to Claim 4 or 5, **characterized in that** the multifilament yarns of the cord all consist of polyamide 10.10.

7. Elastomer product according to Claim 4 or 5, **characterized in that** at least one multifilament yarn of the cord does not consist of polyamide 10.10.

8. Elastomer product according to Claim 7, **characterized in that** the at least one multifilament yarn consists of polyester, a polyamide type other than polyamide 10.10, aramid, polyketone, preferably of fibers manufactured from natural polymers or of natural fibers.

9. Elastomer product according to one or more of Claims 1 to 8, **characterized in that** it is a pneumatic vehicle tire.

10. Elastomer product according to Claim 9, **characterized in that** the linear textile structure is in the belt bandage.

## Revendications

1. Produit élastomère, contenant une structure textile en forme de ligne pour le renforcement, **caractérisé en ce que** la structure textile en forme de ligne contient des fibres de polyamide 10.10.

2. Produit élastomère selon la revendication 1, **caractérisé en ce que** la structure textile en forme de ligne est un fil multifilament torsadé.

3. Produit élastomère selon la revendication 1 ou 2, **caractérisé en ce que** le fil multifilament présente une finesse de 100 à 5000 dtex et une torsion de 100 à 600 t/m.

4. Produit élastomère selon la revendication 1, **caractérisé en ce que** la structure textile en forme de ligne est une corde composée d'au moins deux fils multifilaments torsadés finalement l'un à l'autre, dans lequel les fils multifilaments individuels présentent chacun une finesse de 250 à 4000 dtex et une prétorsion de 100 à 600 t/m et sont torsadés finalement avec une torsion de 100 à 600 t/m.

5. Produit élastomère selon la revendication 4, **caractérisé en ce que** la corde se compose de 2 ou 3 fils multifilaments torsadés finalement.

6. Produit élastomère selon la revendication 4 ou 5, **caractérisé en ce que** tous les fils multifilaments de la corde sont composés de polyamide 10.10.

7. Produit élastomère selon la revendication 4 ou 5, **caractérisé en ce qu'**au moins un fil multifilament de la corde n'est pas composé de polyamide 10.10.

8. Produit élastomère selon la revendication 7, **caractérisé en ce qu'**au moins un fil multifilament se compose de polyester, d'un autre type de polyamide que le polyamide 10.10, d'aramide, de polycétone, de préférence de fibres chimiques en polymères naturels ou de fibres naturelles.

9. Produit élastomère selon au moins une des revendications 1 à 8, **caractérisé en ce qu'**il est un pneumatique de véhicule.

10. Produit élastomère selon la revendication 9, **caractérisé en ce que** la structure textile en forme de ligne est contenue dans le bandage de la nappe d'armature.
